# EUROPEAN PATENT APPLICATION

(11) **EP 1 489 711 A1**
(43) Date of publication of application: **22.12.2004**
(21) Application number: 04380123.2
(22) Date of filing: 10.06.2004
(51) Int. Cl.: H02G 3/04, A62C 3/16, C08K 5/524

(54) **Synthetic resin extrudable composition**

(30) Priority: 16.06.2003 ES 200301403
(71) Applicant: Unex Aparellaje Electrico S.L., 08903 L'Hospitalet de Llobregat (Barcelona) (ES)
(72) Inventor: Benito Navazo, Juan Manuel, 08290 Sant Cugat del Valles (Barcelona) (ES)
(74) Representative: Curell Aguilà, Marcelino

(57) **Abstract**

The invention relates to a synthetic resin extrudable composition, lacking halogens, which comprises a polycarbonate resin associated with an ABS resin and incorporating phosphate, polysiloxane, fluorinated, zinc and/or antimonium oxide salt and inorganic extender type flame-retardant agents. The composition according to the invention has a high level of fire-resistance corresponding to the I2 classification of the French norm NF-F16.102.

## Description

### Field of the invention

This invention relates to a synthetic resin extrudable composition, in particular a thermoplastic composition which is flame-retardant, does not include halogenous compounds and which is designed in particular for the manufacture of ducting for electrical conductors, without thereby excluding other applications, which has a performance as to flame-retardance complying with the 12 classification when the products manufactured with said composition are tested under the norm which describes the test of the French standard NF-F16.102.

### State of the art

Currently, most electrical ducting is manufactured with extrudable compositions of polyvinyl chloride, PVC. Almost all of these PVC materials meet requirements concerning both the material itself and the electrical ducting manufactured with said material, such requirements concerning norms as to fire and smoke.

However, lately there is growing pressure against the use of PVC materials both from legislating bodies and public opinion, based principally on pointers as to environmental problems originated by halogenous materials such as PVC.

Other materials which differ from PVC and which are flame retarded with halogenous compounds are known; they have good electrical behaviour and flame resistance, but, nevertheless, also suppose environmental problems on a par with PVC materials.

Also known on the market are articles obtained by extrusion of polycarbonate compositions and mixtures of such with ABS (acrylonitrile, butadiene, styrene) flame retarded with halogen-free products, such as compounds containing phosphorus. However such do not comply with current fire-resistance norms and, as a result, are not suitable for manufacture of the above-mentioned electrical ducting. The fire-resistant treatment of polycarbonate resins is disclosed in the patents EP 0 767 204, US 5 837 757 and EP 1 094 093, in which the polycarbonate resin is associated with a unique fire-resistant component, such as titanium oxide, a phosphate ester or a polysiloxane. Yet, none of these patents have considered that the fire-resistant composition could be suitable for extrusion production of articles for electrical installations capable of being classified as 12 under the French norm NF-F16.102.

### Summary of the invention

It is known that of the synthetic thermoplastic resins available in the market, polycarbonates and mixtures thereof with ABS resins (acrylonitrile, butadiene, styrene resins) have the best fire-resistant properties; the solution adopted has thus been to add to a given mixture of said resins a group of compounds which are "per se" flame retardant together with a water liberating material.

According to the solution adopted, a synthetic resin extrudable composition is produced which is highly fire-resistant and does not include halogenous compounds, said extrudable composition comprising a polymeric matrix formed by:
(A) 70 to 100 parts by weight of a polycarbonate resin and
(B) 0 to 30 parts by weight of an ABS resin (acrylonitrile, butadiene, styrene), the sum of the parts by weight of said polycarbonate resin and said ABS resin being equal to 100,
   said extrudable composition being characterised in that it further comprises:
(C) 5 to 25 parts by weight of a flame retardant agent of the group comprising resorcinol bis (diphenyl phosphate) (RDP) and bisphenol A bis (diphenyl phosphate) (BDP),
   said extrudable composition likewise comprising at least one of the following additives:
(D) 0.5 to 5 parts by weight of an organically modified polysiloxane in order to improve compatibility with the polymeric matrix,
(E) 0.01 to 0.5 parts by weight of a fluorinated derivative of an alkaline alkyl sulfonate,
(F) 0.05 to 0.5 parts by weight of a fluorinated polymer (PTFE) having a microfibril structure,
(G) 0.5 to 10 parts by weight of zinc and/or antimonium oxide salts,
(H) 2 to 15 parts of hydrated inorganic extender.
   Resorcinol bis (diphenyl phosphate) (RDP) and bisphenol A bis (diphenyl phosphate) (BDP) have the following structural formulas, respectively: 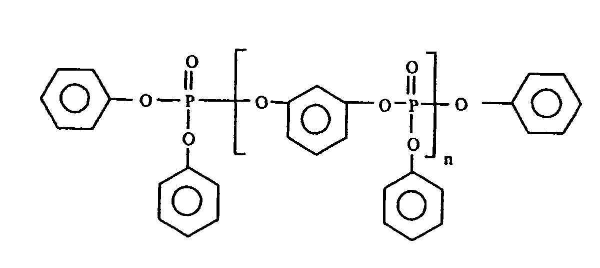 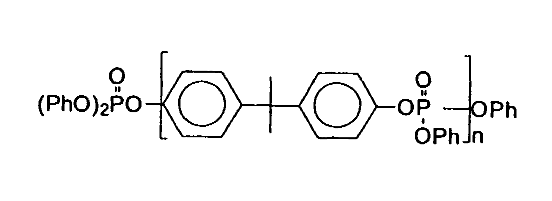 Where n = 1 - 7.
   The addition of organically modified polysiloxane raises the flame-retardant capacity of the fire-proofing agents and likewise acts to improve the process. Advantageously, said polysiloxane is modified organically with an epoxy organic group.
   Advantageously, said fluorinated derivative of an alkaline alkyl sulfonate is selected from the group comprising potassium 1,1,2,2,3,3,4,4,4 nonafluoro butane sulfonate and potassium hydrofluoro butane sulfonate having the formula CF₃-CF₂-CF₂-CF₂-SO3⁻K⁺.
   The fluorinated polymer (PTFE) acts as antidrip agent so that the fire-resistant properties of the extrudable composition and in consequence the product manufactured with said composition are heightened. Advantageously said fluorinated polymer having a microfibril structure is ethylene polytetrafluoride.
   The zinc and/or antimonium oxide salts act synergetically with the principal flame-retardant system. Advantageously, salts of the group comprising zinc borate, zinc stannate and zinc hydroxystannate are used as zinc salts.
   The hydrated inorganic extenders have a significant effect as concerns fire-proofing, since they give off water molecules and extract heat from the medium. Preferably magnesium hydroxide, particles thereof being superficially compatible with the polymeric matrix, is chosen as hydrated inorganic extender. In particular, said particles are covered exteriorly so that they are compatible with the polymeric matrix.
   Preferably, said extrudable composition further includes at least one of the following additives:
(I) 5 to 50 parts by weight of a diluent inorganic extender,
(J) 0.005 to 0.1 parts by weight of an antioxidant, so as to avoid the possible appearance of radicals caused by the degradation of the polymeric matrix, and
(K) 0.5 to 4 parts by weight of a pigment.

Advantageously, the diluent inorganic extender is a compound selected from the group comprising compounds compatibilised with the polymeric matrix belonging to the group comprising naturally occurring calcium carbonate (chalk, limestone or marble), precipitated calcium carbonate, calcium and magnesium carbonate (dolomitic), barium sulphate (barite), calcium sulphate and silicates (talc, mica, kaolin, and calcinated kaolin, felspar, wollastonite, glass spheres), whether considered separately or in their possible combinations.

Advantageously, the antioxidant is selected from the group comprising hindered phenol and phosphites, whether considered separately or in their possible combinations.

Preferably, said pigment is a compound of titanium dioxide, being in this case a white coloured pigment which provides the finished product with whiteness and opacity, and being obtained by any of the conventional processes for this product (via chloride or sulphate). Obviously other colours and other pigments are suitable.

It should be clarified that the compositions given above, as well as in the following examples and in the claims, as "parts by weight" refer to parts by weight with respect to the principal polymeric part (in this case a mixture of polycarbonate resin and ABS resin) said principal polymeric part being assigned a part by weight equal to 100. Contents in additives are therefore expressed in parts by weight added with respect to the principal polymeric part whose part by weight, as we have noted, is equal to 100, such that the sum of the parts by weight of all the components, including the principal polymeric part and the additives, is greater that 100. This manner of expressing the composition is a conventional practice in the field of the invention.

### Detailed description of mbodiments of the invention

The following table presents four examples of extrudable compositions. Example 1 is a control that has been included for comparative reasons and corresponds to a polycarbonate resin that does not contain the additives proper to the invention. Examples 2, 3 and 4 correspond to different embodiments of extrudable compositions according to the invention.

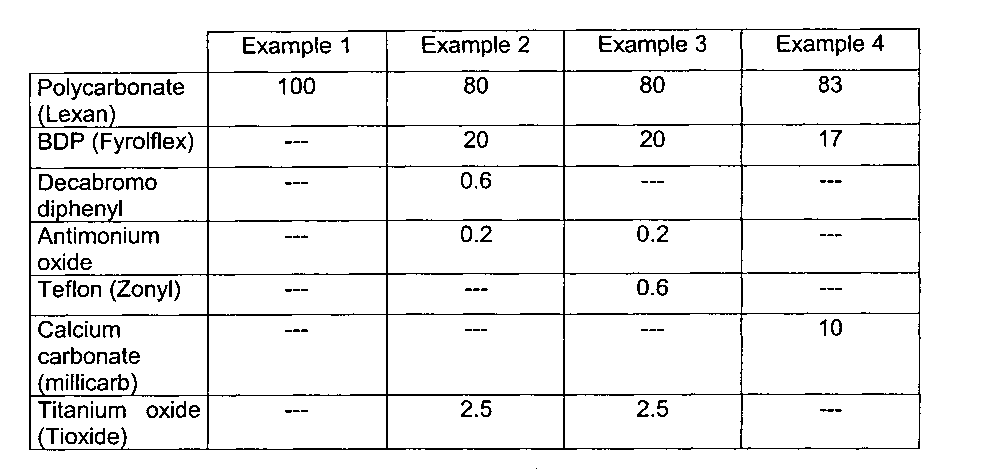

The compositions in the above table are given in units of absolute mass, without necessarily having adjusted to 100 the part corresponding to the polymeric matrix (constituted in this case by polycarbonate).

For better compatibility with the claims, the following is a table completely analogous to the above, in which the part corresponding to the polymeric matrix has been adjusted to 100.

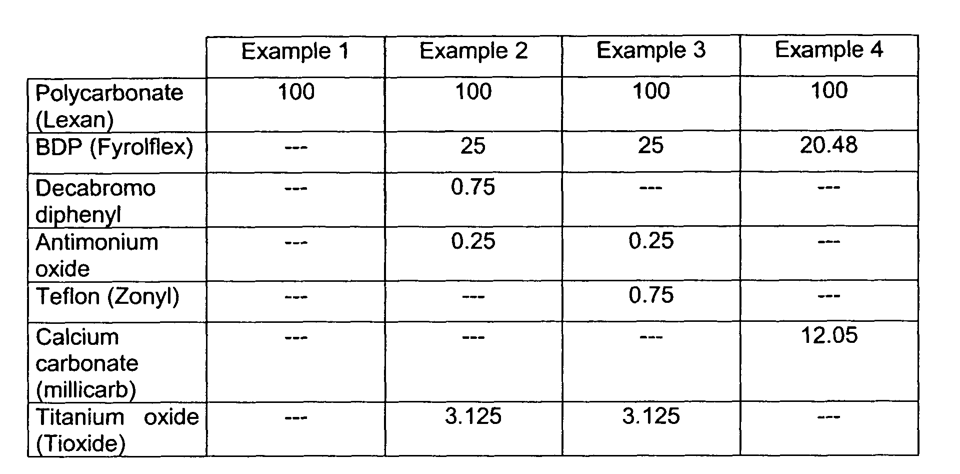

The following table represents the flame-retardant results for the different examples with reference to the Oxygen Index (O.I.):

| | O.I. (%) |
|---|---|
| Example 1 | 27.0 |
| Example 2 | 38.5 |
| Example 3 | 40.5 |
| Example 4 | 37.5 |

Additionally, the compositions according to the invention prove to be a thermoplastic which, intended in particular for the manufacture of electric ducting, has exceedingly good performance in extrusion processes. Precise technology has been used in mixing the components: a corotative double screw machine with side feed for the incorporation of mineral extenders and pigments, and in the case of the liquid additives, a pump such that the viscosity of said additives does not suppose an impediment for a precise measurement.

Finally, electrical ducting manufactured with the compositions according to the invention obtains classification I2 according to the French norm NF-F16.102 imposing compliance with the hot wire test and oxygen index requirements, which supposes a real novelty in this type of manufactured products.

## Claims

1. Synthetic resin extrudable composition which is highly flame-retardant and does not include halogenous compounds, said extrudable composition comprising a polymeric matrix formed by:
(A) 70 to 100 parts by weight of a polycarbonate resin and
(B) 0 to 30 parts by weight of an ABS resin, the sum of the parts by weight of said polycarbonate resin and said ABS resin being equal to 100,
said extrudable composition being **characterised in that** it further comprises:
(C) 5 to 25 parts by weight of a fire-resistant agent of the group comprising resorcinol bis (diphenyl phosphate) and bisphenol A bis (diphenyl phosphate),
said extrudable composition likewise comprising at least one of the following additives:
(D) 0.5 to 5 parts by weight of a organically modified polysiloxane,
(E) 0.01 to 0.5 parts by weight of a fluorinated derivative of an alkaline alkyl sulfonate,
(F) 0.05 to 0.5 parts by weight of a fluorinated polymer having a microfibril structure,
(G) 0.5 to 10 parts by weight of zinc and/or antimonium oxide salts,
(H) 2 to 15 parts of hydrated inorganic extender.

2. Synthetic resin extrudable composition according to claim 1,
**characterised in that** said polysiloxane is organically modified with an epoxy organic group.

3. Synthetic resin extrudable composition according to claims 1 or 2, **characterised in that** said fluorinated derivative of an alkaline alkyl sulfonate is selected from the group comprising potassium 1,1,2,2,3,3,4,4,4 nonafluoro butane sulfonate and potassium hydrofluoro butane sulfonate.

4. Synthetic resin extrudable composition according to any of claims 1 to 3, **characterised in that** said fluorinated polymer having a microfibril structure is ethylene polytetrafluoride.

5. Synthetic resin extrudable composition according to any of claims 1 to 4, **characterised in that** salts of the group comprising zinc borate, zinc stannate and zinc hydroxystannate are used as zinc salts.

6. Synthetic resin extrudable composition according to any of claims 1 to 5, **characterised in that** magnesium hydroxide, particles thereof being superficially compatible with the polymeric matrix, is chosen as the hydrated inorganic extender.

7. Synthetic resin extrudable composition according to any of claims 1 to 6, **characterised in that** it further comprises at least one of the following additives:
(I) 5 to 50 parts by weight of a diluent inorganic extender,
(J) 0.005 to 0.1 parts by weight of an antioxidant, and
(K) 0.5 to 4 parts by weight of a pigment.

8. Synthetic resin extrudable composition according to claim 7,
**characterised in that** the diluent inorganic extender is a compound of the group comprising compounds compatibilised with the polymeric matrix and belonging to the group comprising naturally occurring calcium carbonate, precipitated calcium carbonate, calcium and magnesium carbonate, barium sulphate, calcium sulphate and silicates, whether considered separately or in their possible combinations

9. Synthetic resin extrudable composition according to claims 7 or 8, **characterised in that** the antioxidant is one of the group comprising hindered phenol and phosphites, whether considered separately or in their possible combinations.

10. Synthetic resin extrudable composition according to any of claims 7 to 9, **characterised in that** said pigment is a compound of titanium dioxide.
